# EUROPEAN PATENT SPECIFICATION

(11) **EP 0 488 708 B1**
(45) Date of publication and mention of the grant of the patent: **29.01.1997**
(21) Application number: 91310983.1
(22) Date of filing: 28.11.1991
(51) Int. Cl.: G02F 1/313, G02F 1/315, G02F 1/13

(54) **Optical switching device**
Optische Schaltvorrichtung
Dispositif de commutation optique

(30) Priority: 28.11.1990 JP 327518/90
(43) Date of publication of application: 03.06.1992
(73) Proprietor: FUJITSU LIMITED, Kawasaki-shi, Kanagawa 211 (JP)
(72) Inventor: Mochizuki, Akihiro, Atsugi-shi, Kanagawa 243 (JP); Motoyoshi, Katsusada, Yokahama-shi, Kanagawa 227 (JP)
(74) Representative: Fane, Christopher Robin King

(56) References cited:
- WO-A-84/04601
- 9TH EUROPEAN CONFERENCE ON OPTICAL COMMUNICATION (ECOC 83), October 1983, GENEVA (CH) pages 213 - 216 OKAMURA Y ET AL 'Electrooptic leaky waveguides using nematic liquid crystal'
- IEEE TRANSACTIONS ON MICROWAVE THEORY AND TECHNIQUES, vol.MTT-30, no.10, October 1982, NEW YORK pages 1591 - 1598 Kobayashi M et al '2*2 optical waveguide matrix switch using nematic liquid crystal'
- JAPANESE JOURNAL OF APPLIED PHYSICS, PART 1 (REGULAR PAPERS), vol.29, no.9, September 1990, TOKYO JP pages 1724 - 1726, XP000164720 Muto S et al 'Optical stabilizer and directional coupler switch using polymer thin film waveguides with liquid crystal clad'
- JAPANESE JOURNAL OF APPLIED PHYSICS, LETTERS., vol.29, no.29, February 1990, TOKYO JP pages L322 - L325, XP000116892 MOCHIZUKI A ET AL 'An electric bilayer model of the transient current in a nematic liquid crystal cell'

## Description

The present invention relates to an optical switching device.

The transmission and processing of information with light is particularly useful in high density information processing such as multi-mode communication or multi-mode switching, since optical signals are not subject to normal electromagnetic interference.

To perform such processing, various proposals have been made to combine a plurality of optical elements, for example a wave guide and an optical switching element, in a single body.

For example, an optical switching element or optical modulator has been proposed in which titanium is diffused into a substrate of single crystal lithium niobate (LiNbO₃), a ferroelectric substance, to form a wave guide. Optical switching is then effected by application or removal of an applied voltage, making use of an electro-optical effect.

This type of optical switching device using a ferroelectric single crystal is promising because it has excellent environmental resistance and permits high speed switching.

However, such an optical switching device using a ferroelectric single crystal is subject to manufacturing difficulties, and it is difficult to arrange a plurality of such switching elements into a matrix form for multi-mode processing purposes. An optical switching device including a waveguide comprising a core and a cladding comprising switchable nematic liquid crystal material is disclosed in WO-A-84 04601.

According to the present invention there is provided an optical switching device including a liquid crystal cell comprising:
two transparent mutually-opposed substrates having a liquid crystal material comprising dimers sandwiched therebetween; and
two transparent electrodes, adjacent respectively to the inner main faces of the said substrates so that the liquid crystal material is between the electrodes, there being an alignment film between each electrode and the liquid crystal material for separating said dimers of the liquid crystal material into monomers so as to form ferroelectric outer regions of the liquid crystal material that are adjacent respectively to the said substrates;
the liquid crystal material between the substrates being bounded at a first end of the said cell by a transparent side wall, for admitting a coherent light beam into the liquid crystal material, and at an opposite end of the said cell by a further side wall; and
the device being such that a predetermined change in voltage between the said electrodes can bring about a change between a first state in which the refractive index of the liquid crystal material in one of said outer regions has a first value such that a light beam in a central region of the liquid crystal material, between the two outer regions, is totally internally reflected at the interface with the said one outer region, and a second state in which the refractive index in said one outer region has a second value such that the light beam is at least partially transmitted through said one outer region, from the said central region, towards the adjacent substrate.

The transparent electrodes may be in the form of strips and the substrates may be arranged such that the strips of the transparent electrodes form an X-Y matrix, to form a device comprising two-dimensionally arranged multiple optical switching elements.

Further, a plurality of optical switching devices embodying the present invention can be arranged into an assembly in which a light emitted from a main surface of an optical switching device enters the central region of another such optical switching device where the light is further switched. The light from the first optical switching device may be sent to the second optical switching device through a glass fiber.

Reference will now be made by way of example to the accompanying drawings, in which:
Fig. 1 illustrates principles of an embodiment of the present invention;
Fig.2 is a schematic view of an example of a two-dimensionally arranged multiple optical switching device;
Figs. 3 and 4 illustrate principles of an optical switching device embodying the present invention;
Fig. 5 is a graph showing the relationship between voltage applied to a liquid crystal cell and the intensity of a light beam emitted from that cell;
Figs. 6A and 6B illustrate the switching of light beams in an optical switching device utilizing a liquid crystal cell and having 3 x 3 matrix electrodes; and
Fig. 7 shows drive signals applied to the optical switching device shown in Figs. 6A and 6B.

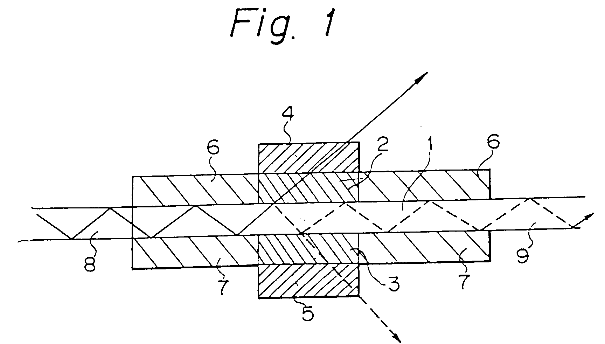

Fig. 1 shows an optical switching device which comprises a first layer (a core layer) 1, second and third layers (cladding layers) 2 and 3, and electrodes 4 and 5. The second and third layers sandwich a portion of the first layer 1. The remainder of the first layer is sandwiched by fourth layer portions 6 and 7.

The first layer 1 has a first refractive index. The refractive index of the second layer 2 can be changed between second and third refractive indices by an electro-optical effect, using a voltage applied by the electrodes 4 and 5. When the second layer 2 has the second refractive index, a coherent light beam in the first layer 1 is totally internally reflected at the respective interfaces with the second and third layers 2 and 3, providing that the third layer 3 also has a refractive index such as to produce total internal reflection of the light. The light beam is thus transmitted or guided through the first layer. On the other hand, when the second layer 2 has the third refractive index, a coherent light beam in the first layer 1 is not totally internally reflected but rather transmitted through the second layer 2 toward the outside main surface of the second layer 2. Thus, the light that entered into the first layer can be switched by the electro-optical effect from propagating towards the outside of the second layer.

Simultaneously, the third layer 3 may be made such that the refractive index of the third layer 3 can be changed by the electro-optical effect so as to produce such a switching effect. Further, if the refractive indices of the second and third layers 2 and 3 can be controlled respectively, the light entering the first layer can be switched in three ways, i.e. to propagate along the first layer or to propagate outwards through the second layer or to propagate outwards through the third layer.

As shown, the second and third layers 2 and 3 sandwich only a portion of the first layer 1, the remainder of the latter being sandwiched by the fourth layers 6 and 7 which have refractive index values such that the light in the first layer 1 is totally internally reflected by the fourth layers 6 and 7. Thus, the portion including the fourth layers 6 and 7 forms a wave guide.

Further, the second layer 2 and the fourth layer 6 may be made of the same material, such that the light in the first layer 1 is of totally internally reflected by the second layer 2 when a voltage is not applied to the electrodes, and the refractive index of the second layer 2 can be changed by the electro-optical effect to a third refractive index such that the light in the first layer 1 is not totally internally reflected but is transmitted through the second layer 2. Similar considerations can be applied to the third and fourth layers 3 and 7. In these cases, the first layer 1 may be referred to as a core layer and the second to fourth layers 2, 3, 6 and 7 may be referred to as cladding layers.

Note that the change from total internal reflection to transmission out of the core layer can be brought about in some embodiments of the invention by the application of a voltage and in other embodiments by the removal of an applied voltage.

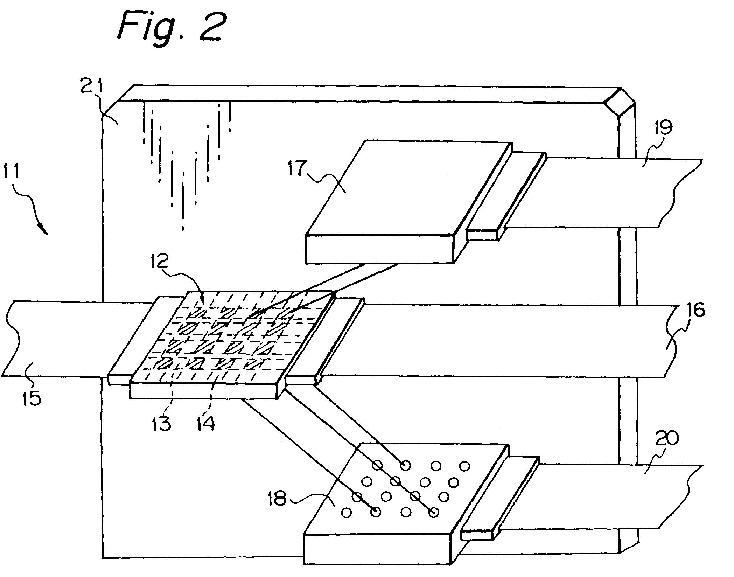

Fig. 2 illustrates an example of an optical switching device embodying the present invention. In this case, an optical switching device 11 has an optical switching element 12 which comprises, in addition to a core layer and cladding layers sandwiching the core layer, not shown, transparent electrodes 13 and 14 in the form of strips arranged to form a 4 x 4 X-Y matrix. The optical switching element 12 is connected with an optical fiber array 15 for a four signal input. The optical fiber array 15 contains four optical fibers arranged to correspond to the lines of four parallel strips of the transparent electrode 13. The optical switching element 12 is also connected with another optical fiber array 16 for a four signal output. The optical fiber array 16 contains four optical fibers arranged to correspond to the lines of four parallel strips of the transparent electrode 13.

The optical switching element 12 has sixteen spots where the strips of the transparent electrodes 13 and 14 are crossed and a light beam can be switched in the direction of transmission in three ways.

The optical switching device 11 further has two photosensor arrays 17 and 18 each having sixteen photosensors that correspond to the sixteen spots of the electrode X-Y matrix. The photosensor arrays 17 and 18 are connected to optical fiber arrays 19 and 20 containing sixteen optical fibers for sixteen signal outputs. The photosensor arrays 17 and 18 need not be spacially separated from the optical switching element 12 and may be directly connected to the element 12. Further, optical fibers or optical fiber arrays may be connected to the element 12, each fiber corresponding to a spot where the transparent electrodes are crossed. The signal output may be an electric conductor array, if desired with a photosensor array that transforms an optical signal to an electric signal.

The optical switching element 12 and the photosensor arrays 19 and 20 are supported by a support 21.

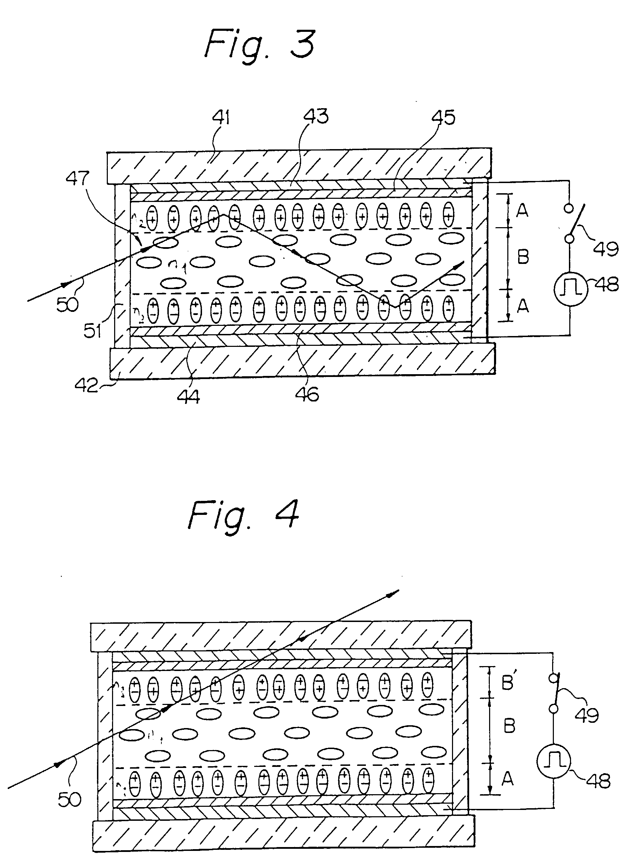

The present inventors have investigated the alignment of a nematic liquid crystal adjacent to substrates in a liquid crystal cell and found that when a particular liquid crystal material and a particular liquid crystal molecular alignment film are used, the alignment of the liquid crystal is remarkably changed from a portion adjacent to the substrates to a central portion between the substrates (Jap. J. Appl. Phys., Vol. 29. No. 29, L322-L325, Feb. 1990 and Jap. J. Appl. Phys., Vol 29, No. 10, L1898-L1900, Oct. 1990). As shown in Fig. 3, the liquid crystal molecules adjacent to the substrates are aligned transverse to the main surfaces of the substrates and the liquid crystal molecules in the central portion between the substrates are aligned parallel to the main surfaces of the substrates.

Figs. 3 and 4 show the principle of an optical switching device using a liquid crystal cell in accordance with an embodiment of the present invention. Fig. 3 shows the cell when a voltage is not applied and Fig. 4 shows the cell when a voltage is applied. In Figs. 3 and 4, 41 and 42 denote transparent substrates, 43 and 44 transparent electrodes, 45 and 46 alignment films, 47 a liquid crystal material, 48 a power source and 49 an electrical switch.

In Fig. 3, i.e. when a voltage is not applied, if the particular requirements described above are satisfied, the liquid crystal that forms dimers in the central portion of the liquid crystal layer is separated into monomers by an interaction with the alignment films 45 and 46. The monomers align such that their negative pole ends are in contact with the alignment films 45 and 46. Ferroelectric liquid crystals cladding layers A are thus formed. The liquid crystal in the form of dimers in the central portion forms a normal dielectric liquid crystal core layer B.

Recently, the present inventors further found that the ferroelectric liquid crystal layers A have a refractive index n_{A} which has a value, relative to that n_{B} of the normal dielectric liquid crystal layer B, such that when a light beam 50 is introduced into the liquid crystal layer B from a transparent side wall 51, the light beam 50 is transmitted or guided in the liquid crystal layer B, being totally internally reflected at the interface between the ferroelectric liquid crystal layers A and the normal dielectric liquid crystal layer B. The liquid crystal in the cell thus forms a wave guide.

Then, if the switch 49 is turned on as shown in Fig. 4, the polarity of some of the monomers of the ferroelectric liquid crystal layer A is reversed, depending on the polarity of the voltage applied to the cell, immediately upon turning on the switch. For example, if the applied voltage is positive, some of the liquid crystal molecules in the layer B' are reversed in polarity. As a result, the average refractive index of the upper layer A of Fig. 3 is changed, producing a layer B' such that the light beam 50 is not totally internally reflected by the interface with that layer, but rather transmitted through the ferroelectric liquid crystal layer B', the transparent electrode 43 and the transparent substrate 41 and emitted upwardly out of the cell.

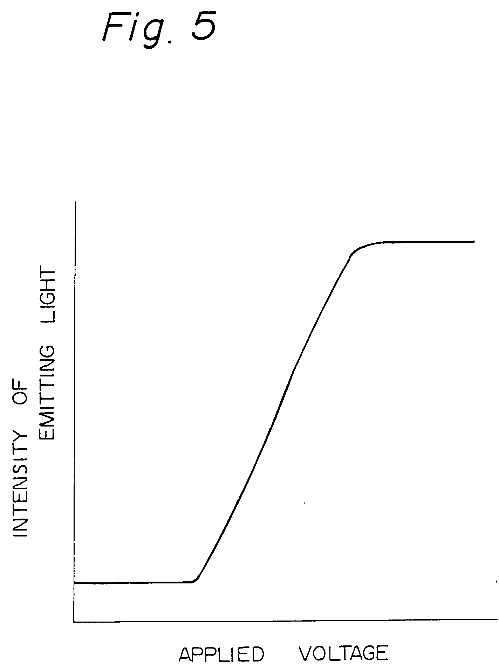

Fig. 5 shows the intensity of the light transmitted out from the cell as a function of the applied voltage. In general, the number of liquid crystal molecules that are reversed in polarization by an application of a voltage increases with the magnitude of the applied voltage, but there is a threshold voltage, as shown in Fig. 5, as in normal liquid crystal displays. Thus, until the voltage is increased to a certain threshold voltage, there is hardly any transmitted light, but when the voltage is above the threshold voltage the intensity of the transmitted light increases with the increase of the applied voltage and attains a saturation value when all the ferroelectric liquid crystals molecules are reversed in polarity.

Thus, according to this embodiment, by a very simple construction of the device, an optical switching device can be combined in one body with a wave guide. For example an optical switching element array having a two-dimensional matrix arrangement can be constructed, allowing parallel optical information processing. Moreover, since a liquid crystal cell is used, the optical switching device of this embodiment can be driven at a low voltage, such as an operating voltage used in C-MOS technology and can be manufactured at a low cost. Further, the technology for manufacturing devices using large and high information content liquid crystal cells is well established. For example, liquid crystal display devices having large X-Y matrices of more than 640 x 400 dots are currently used.

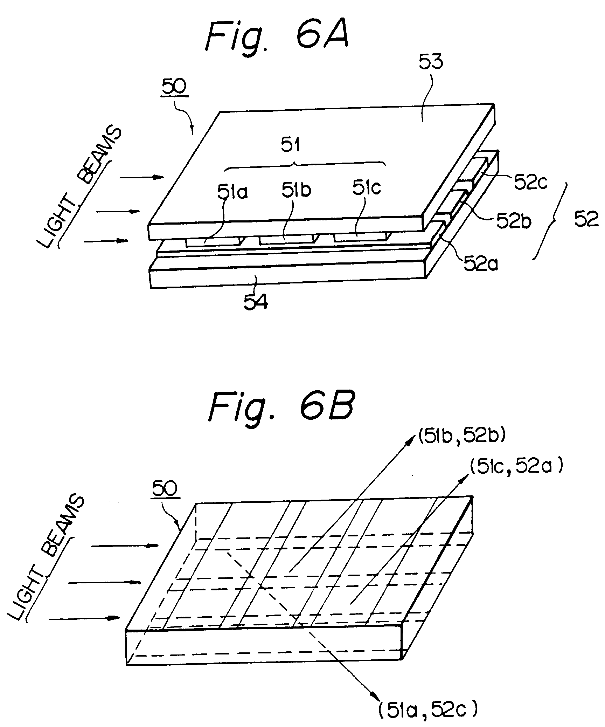

Figs. 6A and 6B show an example of the above embodiment utilizing a liquid crystal cell. Fig. 6A shows schematically the construction of a device 50 (3 x 3-matrix in this case) and Fig. 6B shows the switching of light beams.

In Fig. 6A, the reference numerals 51 (51a, 51b and 51c) denote transparent electrodes comprising three strips for input of a scanning voltage and the reference numerals 52 (52a, 52b and 52c) denote transparent electrodes comprising three strips, extending in crossing relationship to the strips 51, for input of a signal voltage. More specifically, substrates 53 and 54 are made of a glass plate, and the transparent electrodes 51 and 52 of transparent conducting films of, e.g. indium tin oxide (In₂O₃-SnO₂), in the form of strips having a width of 5 mm and a gap of 2 mm, are formed on the substrates 53 and 54.

Alignment films (not shown) are formed on the transparent electrodes 51 and 52 and the substrates 53 and 54, for example by spin coating a polyamide film, firing at about 250°C, and rubbing the surface of each film in the direction of the two films parallel or anti-parallel with each other when the electrodes are arranged in the form of a matrix. The alignment film is preferably a film that has a high surface polarity, and must be capable of separating dimers to monomers. For example, the film may be made of a polymer having an alkylamine group that has been fired. Other examples of useful alignment films include poly (vinyl alcohol), poly (amide imide), polyamide represented by nylone, poly (acrylonitride), poly (vinyl pyridine), poly (pyrrolidone), poly (vinyl phenol), poly (vinyl acetate), and copolymers of these polymers.

The substrates 53 and 54 are arranged with a gap of 30 µm to form a cell.

The cell is filled with a liquid crystal. An example of the liquid crystal is a nematic liquid composition containing cyanobiphenyl as a main component. The liquid crystal in the cell is a liquid crystal capable of forming a dimer. The capability of forming a dimer can be predicted by the structure of the molecule, and the formation of a dimer can be detected experimentally by measuring the capacitance of the molecule in a cell. Examples of such liquid crystals include 4-alkyl-4-cyanobiphenyl such as 4-pentyl-4-cyanobiphenyl, 4-heptyl-4-cyanobiphenyl, and 4-hexyl-4-cyanobiphenyl, 4-alkoxy-4-cyanobiphenyl, 4-alkyl-4-dioxane-4-cyanobenzene such as 4-pentyldioxane-4-cyanobenzene, 4-alkoxy-dioxane-4-cyanobenzene, 4-alkyl-4-fluorobiphenyl such as fluorobiphenyl, 4-alkoxy-4-fluorobiphenyl, etc.

The liquid crystal cell has a transparent side wall or window for admitting light into the cell.

In Figs. 6A and 6B, if three beams are incident on the left side windows (not shown), the beams are guided in the liquid crystal layer and are emitted from the cell at the points where the transparent electrodes 51 and 52 are crossed when a voltage is applied thereto. As described with reference to Figs. 3 and 4, the optical switching is performed by a change of a ferroelectric liquid crystal layer A adjacent to the substrate to a normal dielectric layer B' via a change in the voltage applied to the transparent electrodes. Depending on the position and the polarity of the applied voltage, the light beams may be emitted from the cell at any point of the matrices, for example upward as beams from the crossing points (51b, 52b) and (51c, 52a) or downward as beams from the crossing point (51a, 52c).

When three light beams having a diameter of 20 µm were incident in parallel on the device and subject to optical switching, it was confirmed that the ratio of the light beam intensity in the direction of a main surface of a cell between ON and OFF was more than 50 to 1.

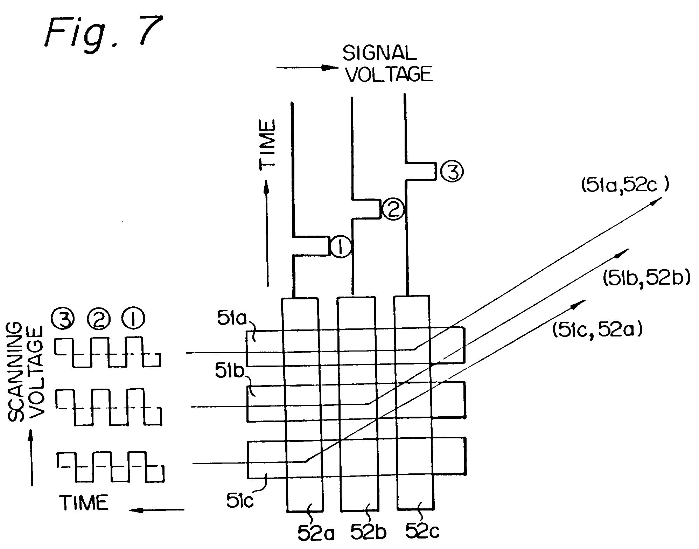

Fig. 7 illustrates the application of driving signals to 3 x 3 matrix cell. Scanning voltage pulses of ±2 V as shown in Fig. 6 are applied to the transparent electrodes 51 (51a, 51b, 51c) and signal voltages +18 V are applied to the transparent electrodes 52 (52a, 52b, 52c). With appropriate synchronisation of the pulses ①, ② and ③, the individual voltages at the crossing points (51a, 52c), (51b, 52b) and (51c, 52a) become +20 V at one instant, so that the light beams are switched upwardly there, for example, whilst the light beams at the other crossing points are non-selected (0 V) or half selected (+16 V) so that the light beams are retained in the liquid crystal layer. By making the signal voltage -18 V at a certain crossing point, the light beam at that crossing point can be switched in the opposite direction, i.e. downwards.

Although the above example relates to a 3 x 3-matrix optical switching device, it is clear that an optical switching device with a larger number of matrix elements can be made by increasing the number of the strips of the transparent electrodes.

Further, it is clear that a number of the optical switching devices may be assembled in multi stages to process or switch the light beams in a number of stages.

## Claims

1. An optical switching device including a liquid crystal cell comprising:
two transparent mutually-opposed substrates (41, 42) having a liquid crystal material (47) comprising dimers, sandwiched therebetween; and
two transparent electrodes (43, 44), adjacent respectively to the inner main faces of the said substrates (41, 42) so that the liquid crystal material is between the electrodes, there being an alignment film (45, 46) between each electrode (43, 44) and the liquid crystal material (47) for separating said dimers of the liquid crystal material into monomers so as to form ferroelectric outer regions of the liquid crystal material (47) that are adjacent respectively to the said substrates (41, 42);
the liquid crystal material (47) between the substrates (41, 42) being bounded at a first end of the said cell by a transparent side wall (51), for admitting a coherent light beam into the liquid crystal material, and at an opposite end of the said cell by a further side wall; and
the device being such that a predetermined change in voltage between the said electrodes (43, 44) can bring about a change between a first state in which the refractive index (n_{A}) of the liquid crystal material in one of the said outer regions (A) has a first value (n₂), such that a light beam in a central region (B) of the liquid crystal material, between the two outer regions, is totally internally reflected at the interface with the said one outer region, and a second state in which the refractive index in said one outer region has a second value (n₃) such that the light beam is at least partially transmitted through the said one outer region (B'), from the said central region (B), towards the adjacent substrate (41).

2. An optical switching device according to claim 1, such that a predetermined change in voltage between the said electrodes (43, 44) can bring about a change between a first state in which the refractive index (n_{A}) of the liquid crystal material in the other of said outer regions (A) has a first value (n₂) such that a light beam in a central region (B) of the liquid crystal material, between the two outer regions, is totally internally reflected at the interface with the said other outer region, and a second state in which the refractive index in said other outer region has a second value (n₃) such that the light beam is at least partially transmitted through the said other outer region, from the said central region (B), towards the adjacent substrate (42).

3. A device according to one of the preceding claims further comprising means for detecting a light beam that has been transmitted through the said one outer region.

4. A device according to one of the preceding claims further comprising a means for detecting a light beam that has been transmitted through the said other outer region.

5. A device according to one of the preceding claims further comprising a power source for supplying a voltage to said electrodes.

6. A device according to one of the preceding claims wherein said liquid crystal material is nematic at an operating temperature of the device.

7. A device according to one of the preceding claims wherein said liquid crystal material is 4-alkyl-4-cyanobiphenyl, 4-alkoxy-4-cyanobiphenyl, 4-alkyldioxane-4-cyanobenzene, 4-alkoxy-dioxane-4-cyanobenzene, 4-alkyl-4-fluorobiphenyl, or 4-alkoxy-4-fluorobiphenyl.

8. A device according to one of the preceding claims wherein said alignment film is a film having an anion radical.

9. A device according to claim 8, wherein said alignment film is made of a polymer having an alkylamine group.

10. A device according to one of the preceding claims wherein said alignment film is made of poly (vinyl alcohol), poly (amide imide), poly amide, poly (acrylonitrile), poly (vinyl pyridine), poly (pyrrolidone), poly (vinyl acetate), or a co-polymer of two or more of these polymers.

11. A device according to one of the preceding claims, wherein the transparent electrode adjacent to one of the said inner main faces is one of a first plurality of strip-form electrodes provided adjacent to that inner main face, and wherein the transparent electrode adjacent to the other of said inner main faces is one of second plurality of strip-form electrodes provided adjacent to the other inner main face and extending in crossing relationship to the strip-form electrodes at the first plurality so that the device is operable as a two-dimensional X-Y matrix of optical switching elements.

12. An assembly of optical switching devices, each being a device according to one of the preceding claims, arranged so that a coherent light beam emitted from a main surface of one of the optical switching devices is introduced into the central region of another of the optical switching devices where the introduced light beam can be further switched.

## Patentansprüche

1. Optische Schaltvorrichtung, die eine Flüssigkristallzelle enthält, umfassend:
zwei transparente, einander gegenüberliegende Substrate (41, 42), zwischen welchen ein Flüssigkristallmaterial (47), das Dimere umfaßt, sandwichartig zwischengelegt ist; und
zwei transparente Elektroden (43, 44), die jeweils an den inneren Hauptflächen der Substrate (41, 42) anliegen, so daß das Flüssigkristallmaterial zwischen den Elektroden ist, wo zwischen jeder Elektrode (43, 44) und dem Flüssigkristallmaterial ein Ausrichtungsfilm (45, 46) zum Trennen der Dimere des Flüssigkristallmaterials (47) in Monomere vorhanden ist, um so ferroelektrische äußere Bereiche des Flüssigkristallmaterials (47) zu bilden, die jeweils an den Substraten (41, 42) anliegen;
welches Flüssigkristallmaterial (47) zwischen den Substraten (41, 42) an einem ersten Ende der Zelle durch eine transparente Seitenwand (51) begrenzt ist, um einen kohärenten Lichtstrahl in das Flüssigkristallmaterial eintreten zu lassen, und an einem entgegengesetzten Ende der Zelle durch eine weitere Seitenwand; und
welche Vorrichtung so ausgelegt ist, daß eine vorbestimmte Spannungsveränderung zwischen den Elektroden (43, 44) eine Veränderung zwischen einem ersten Zustand, in welchem der Brechungsindex (n_{A}) des Flüssigkristallmaterials in einem der äußeren Bereiche (A) einen ersten Wert (n₂) hat, so daß ein Lichtstrahl in einem zentralen Bereich (B) des Flüssigkristallmaterials zwischen den beiden äußeren Bereichen vollständig intern an der Grenzfläche mit dem einen äußeren Bereich reflektiert wird, und einem zweiten Zustand bewirken kann, in welchem der Brechungsindex des einen äußeren Bereiches einen zweiten Wert (n₃) hat, so daß der Lichtstrahl von dem zentralen Bereich (B) wenigstens teilweise durch den einen äußeren Bereich (B') zu dem anliegenden Substrat (41) durchgelassen wird.

2. Optische Schaltvorrichtung nach Anspruch 1, die so ausgelegt ist, daß eine vorbestimmte Spannungsveränderung zwischen den Elektroden (43, 44) eine Veränderung zwischen einem ersten Zustand, in welchem der Brechungsindex (n_{A}) des Flüssigkristallmaterials in dem anderen der äußeren Bereiche (A) einen ersten Wert (n₂) hat, so daß ein Lichtstrahl in einem zentralen Bereich (B) des Flüssigkristallmaterials zwischen den beiden äußeren Bereichen vollständig intern an der Grenzfläche mit dem anderen äußeren Bereich reflektiert wird, und einem zweiten Zustand bewirken kann, in welchem der Brechungsindex des anderen äußeren Bereiches einen zweiten Wert (n₃) hat, so daß der Lichtstrahl von dem zentralen Bereich (B) wenigstens teilweise durch den anderen äußeren Bereich zu dem anliegenden Substrat (42) durchgelassen wird.

3. Vorrichtung nach einem der vorstehenden Ansprüche, ferner umfassend eine Einrichtung zum Erfassen eines Lichtstrahles, der durch den einen äußeren Bereich durchgelassen wurde.

4. Vorrichtung nach einem der vorstehenden Ansprüche, ferner umfassend eine Einrichtung zum Erfassen eines Lichtstrahles, der durch den anderen äußeren Bereich durchgelassen wurde.

5. Vorrichtung nach einem der vorstehenden Ansprüche, ferner umfassend eine Leistungsquelle zum Zuliefern einer Spannung zu den Elektroden.

6. Vorrichtung nach einem der vorstehenden Ansprüche, in welcher das Flüssigkristallmaterial bei einer Betriebstemperatur der Vorrichtung nematisch ist.

7. Vorrichtung nach einem der vorstehenden Ansprüche, bei welcher das Flüssigkristallmaterial 4-Alkyl-4-Cyanbiphenyl, 4-Alkoxy-4-Cyanbiphenyl, 4-Alkyldioxan-4-Cyanbenzol, 4-Alkoxydioxan-4-Cyanbenzol, 4-Alkyl-4-Fluorbiphenyl oder 4-Alkoxy-4-Fluorbiphenyl ist.

8. Vorrichtung nach einem der vorstehenden Ansprüche, bei welcher der Ausrichtungsfilm ein Film ist, der ein anionisches Radikal hat.

9. Vorrichtung nach Anspruch 8, bei welcher der Ausrichtungsfilm aus einem Polymer hergestellt ist, das eine Alkylamingruppe hat.

10. Vorrichtung nach einem der vorstehenden Ansprüche, bei welcher der Ausrichtungsfilm aus Poly(vinylalkohol), Poly(amidimid), Poly(amid), Poly(akrylnitril), Poly(vinylpyridin), Poly(pyrrolidon), Poly(vinylacetat) oder einem Copolymer von zwei oder mehreren dieser Polymere hergestellt ist.

11. Vorrichtung nach einem der vorstehenden Ansprüche, bei welcher die transparente Elektrode, die an einer der inneren Hauptflächen anliegt, eine aus einer ersten Vielzahl von streifenförmigen Elektroden ist, die an der inneren Hauptfläche anliegend vorgesehen sind, und bei welcher die transparente Elektrode, die an der anderen der inneren Hauptflächen anliegt, eine einer zweiten Vielzahl von streifenförmigen Elektroden ist, die zu der anderen inneren Hauptfläche anliegend vorgesehen sind und sich in kreuzender Beziehung zu den streifenförmigen Elektroden der ersten Vielzahl erstrecken, so daß die Vorrichtung als eine zweidimensionale X-Y-Matrix von optischen Schaltelementen arbeiten kann.

12. Anordnung von optischen Schaltvorrichtungen, von welchen jede eine Vorrichtung nach einem der vorstehenden Ansprüche ist, die so angeordnet sind, daß ein kohärenter Lichtstrahl, der von einer Hauptoberfläche einer der optischen Schaltvorrichtungen emittiert wird, in den zentralen Bereich einer weiteren optischen Schaltvorrichtung eingeführt wird, wo der eingeführt Lichtstrahl weitergeschaltet werden kann.

## Revendications

1. Dispositif de commutation optique comprenant une cellule à cristal liquide comportant :
deux substrats transparents en vis-à-vis (41, 42) ayant un matériau de cristal liquide (47) comportant des éléments de noircissement intercalé entre eux; et
deux électrodes transparentes (43, 44), adjacentes respectivement aux faces principales intérieures desdits substrats (41, 42) de sorte que le matériau de cristal liquide se trouve entre les électrodes, une pellicule d'alignement (45, 46) se trouvant entre chaque électrode (43, 44), et le matériau de cristal liquide (47) pour séparer lesdits éléments de noircissement du matériau de cristal liquide en monomères de manière à former des régions extérieures ferroélectriques du matériau de cristal liquide (47) qui sont adjacentes respectivement auxdits substrats (41, 42);
le matériau de cristal liquide (47) entre les substrats (41, 42) étant limité à une première extrémité de ladite cellule par une paroi latérale transparente (51), pour admettre un faisceau de lumière cohérente dans le matériau de cristal liquide, et à une extrémité opposée de ladite cellule par une autre paroi latérale; et
le dispositif étant tel qu'une variation prédéterminée de tension entre lesdites électrodes (43, 44) peut provoquer une variation entre un premier état dans lequel l'indice de réfraction (n_{A}) du matériau de cristal liquide dans l'une desdites régions extérieures (A) possède une première valeur (n₂) de telle sorte qu'un faisceau lumineux dans une région centrale (B) du matériau de cristal liquide, entre les deux régions extérieures subit une réflexion interne totale à l'interface avec ladite première région extérieure, et un second état dans lequel l'indice de réfraction dans ladite première région extérieure possède une seconde valeur (n₃) de telle sorte que le faisceau lumineux est au moins partiellement transmis à travers ladite première région extérieure (B'), depuis ladite région centrale (B), vers le substrat adjacent (41).

2. Dispositif de commutation optique selon la revendication 1, de telle sorte qu'une variation prédéterminée de tension entre lesdites électrodes (43, 44) peut provoquer une variation entre un premier état dans lequel l'indice de réfraction (n_{A}) du matériau de cristal liquide dans l'autre desdites régions extérieures (A) possède une première valeur (n₂) de telle sorte qu'un faisceau lumineux dans une région centrale (B) du matériau de cristal liquide, entre les deux régions extérieures, subit une réflexion interne totale à l'interface avec ladite autre région extérieure, et un second état dans lequel l'indice de réfraction dans ladite autre région extérieure possède une seconde valeur (n₃) de telle sorte que le faisceau lumineux soit au moins partiellement transmis à travers ladite autre région extérieure, depuis ladite région centrale (B), vers le substrat adjacent (42).

3. Dispositif selon l'une des revendications précédentes, comportant en outre des moyens pour détecter un faisceau lumineux ayant été transmis à travers ladite première région extérieure.

4. Dispositif selon l'une des revendications précédentes, comportant en outre un moyen pour détecter un faisceau lumineux ayant été transmis à travers ladite autre région extérieure.

5. Dispositif selon l'une des revendications précédentes, comportant en outre une source d'alimentation pour délivrer une tension auxdites électrodes.

6. Dispositif selon l'une des revendications précédentes, dans lequel ledit matériau de cristal liquide est nématique à une température de fonctionnement du dispositif.

7. Dispositif selon l'une des revendications précédentes, dans lequel ledit matériau de cristal liquide est 4-alkyl-4-cyanobiphényle, 4-alkyl-dioxane-4-cyanobenzène, 4-alkoxy-dioxane-4-cyanobenzène, 4-alkyl-4-fluorobiphényle, ou 4-alkoxy-4-fluorobiphényle.

8. Dispositif selon l'une des revendications précédentes, dans lequel ladite pellicule d'alignement est une pellicule ayant un radical anion.

9. Dispositif selon la revendication 8, dans lequel ladite pellicule d'alignement est réalisée en un polymère ayant un groupe alkylamine.

10. Dispositif selon l'une des revendications précédentes, dans laquelle ladite pellicule d'alignement est réalisée en poly (alcool vinylique), poly (amide imide), poly amide, poly (acrylonitrile), poly (pyridine de vinyle), poly (pyrrolidone), poly (acétate de vinyle), ou un copolymère de deux ou plusieurs de ces polymères.

11. Dispositif selon l'une des revendications précédentes, dans lequel l'électrode transparente adjacente à l'une desdites faces principales intérieures est l'une d'une première pluralité d'électrodes sous forme de bande prévues adjacentes à cette face principale intérieure, et dans lequel l'électrode transparente adjacente à l'autre desdites faces principales intérieures est l'une d'une seconde pluralité d'électrodes sous forme de bandes prévues adjacentes à l'autre face principale intérieure et s'étendant en croix par rapport aux électrodes sous forme de bande de la première pluralité de sorte que le dispositif peut être actionné en tant que matrice bidimensionnelle X-Y d'éléments de commutation optiques.

12. Ensemble de dispositifs de commutation optiques, chacun étant un dispositif selon l'une des revendications précédentes, disposés de sorte qu'un faisceau de lumière cohérente émis depuis une surface principale d'un des dispositifs de commutation optiques est introduit dans la région centrale d'un autre des dispositifs de commutation optiques où le faisceau lumineux introduit peut en outre être commuté.
